# EUROPEAN PATENT SPECIFICATION

(11) **EP 1 488 938 B1**
(45) Date of publication and mention of the grant of the patent: **19.04.2006**
(21) Application number: 03425395.5
(22) Date of filing: 18.06.2003
(51) Int. Cl.: B44C 5/04, B44C 3/02, B32B 27/04, D21H 27/28

(54) **Method of producing decorative sheets**
Verfahren zur Herstellung von Dekorfolien
Procédé pour fabriquer des feuilles décoratives

(43) Date of publication of application: 22.12.2004
(73) Proprietor: Tocchio S.r.l., 27029 Vigevano (IT)
(72) Inventor: Cassaghi, Pietro, 26027 Rivolta d' Adda (IT)
(74) Representative: Jorio, Paolo

(56) References cited:
- EP-A- 0 472 036
- EP-A- 1 216 759
- FR-A- 2 692 584
- US-A- 5 527 852
- US-A- 5 558 906
- DATABASE WPI Section Ch, Week 197902 Derwent Publications Ltd., London, GB; Class A97, AN 1979-02695B XP002262356 & JP 53 134914 A (DAIMON M), 25 November 1978 (1978-11-25)

## Description

The present invention relates to a method of producing decorative sheets, in particular, finish sheets for flooring, furniture or wall covering panels.

As is known, laminated panels are widely used for flooring, as a substitute for conventional wood-block (parquet) floors, or for covering walls, furniture, etc., and are normally defined by layers of sheet material (typically paper) coated with a thermosetting (e.g. melamine) resin, and which are pressed together and hot laminated. The surface of the panel to be left exposed is covered with a decorative sheet, which may be either plain or patterned (e.g. to reproduce the grain of the wood being imitated), and which is provided with a protective abrasionproof layer.

To produce the decorative sheet, the paper substrate is first impregnated with polymer resin; one face of the impregnated substrate is then coated with a mixture of polymer resin and an abrasionproof substance (e.g. corundum); and, finally, a finish layer is applied comprising a polymer resin incorporating a low-abrasion substance (to protect the work surfaces of the equipment - specifically, the laminating rollers and presses).

Melarnine, phenolic or urea resins are normally used in these applications, both for impregnating the substrate and coating on the abrasionproof layer. A relevant example of such kind of methods is disclosed in EP-A-1216759.

Methods of the above type, however, are unsatisfactory in terms of the end look of the product. More specifically, surfaces treated as described often show paling and/or are less transparent or dull in appearance.

Moreover, decorative sheets produced as described are fairly fragile and, at any rate, not very flexible, thus possibly resulting in problems or breakage during subsequent processing and handling.

Known methods are also fairly expensive, in particular, by involving large quantities of resin and relatively high-cost processing (and various drying) steps. FR-A-2692584 and JP-A-53134914 disclose laminated panels realised by joining a paper sheet, impregnated with a composition containing polyvinyl alcohol, to a substrate of agglomerate wood particles or to other paper sheets impregnated with different polymer compositions; the laminated panels so obtained possess a very poor abrasion resistance.

It is therefore an object of the present invention to provide a method of producing decorative sheets, in particular finish sheets for flooring, furniture or wall covering panels, designed to eliminate the aforementioned drawbacks of known methods. More specifically, it is an object of the invention to significantly improve the surface transparency and flexibility of the decorative sheet. It is a further object of the invention to provide a method which, though easy and relatively cheap to implement, provides for achieving decorative sheets with a high degree of abrasion resistance and of superior surface finish.

According to the present invention, there is provided a method of producing decorative sheets, in particular finish sheets for flooring, furniture or wall covering panels, as claimed in claim 1.

Here and hereinafter, the term "sheet material" is intended to mean a thin material in the form of a continuous strip or single sheet (e.g. paper, fabric, polymer film, etc.); the sheet material preferably used according to the invention is a cellulose-base material, and more specifically a paper material.

The term "decorative sheet" is intended to mean a thin sheet element obtained from the sheet material after further processing, and which in turn may be in the form of an actual sheet element (a detached sheet of given shape) or, more generally, in the form of a reel-wound strip.

Obviously, the method according to the invention is advantageously performed continuously using sheet material in the form of a strip, to obtain processed strips from which the finished decorative sheets are cut to size (i.e. using conventional continuous reel/reel reel/sheet machines).

In a preferred embodiment, the step of treating with polyvinyl alcohol is an impregnating step performed using an aqueous solution of polyvinyl alcohol.

The polyvinyl alcohol is advantageously used in an aqueous solution with a concentration of approximately 2 to 20% by weight, preferably of approximately 5 to 15% by weight, and preferably of about 10% by weight.

In a preferred embodiment of the invention, the step of applying the polymer composition is performed using the "wet on wet" technique, i.e. immediately after the step of treating with an aqueous solution of polyvinyl alcohol, directly on the wet sheet material.

In one possible variation, however, a pre-drying step is performed between the step of treating with an aqueous solution of polyvinyl alcohol and the step of applying the polymer composition, so that the polymer composition is applied to a dry impregnated sheet material ("wet on dry" technique).

The amount of polyvinyl alcohol applied to the sheet material at the treating step preferably ranges between approximately 2 and 20 g/m², preferably between approximately 5 and 15 g/m², and is preferably about 10 g/m².

The step of applying the polymer composition is a coating step, in which the polymer composition is coated onto at least one surface of the sheet material treated previously with polyvinyl alcohol; the polymer composition comprises a thermosetting polymer resin or a mixture of thermosetting polymer resins, i.e. which set irreversibly by polymerization and/or cross-linking reactions; and the resins used according to the present invention are preferably water-base resins, e.g. selected from the group comprising melamine, phenolic, urea resins or mixtures of these.

Particular advantage is afforded using a polymer composition in the form of an aqueous dispersion containing polyvinyl alcohol mixed with the resin. That is, using mixtures of resin (e.g. melamine resin), water and polyvinyl alcohol, in which the abrasionproof substance is dispersed. The concentration of polyvinyl alcohol in such mixtures preferably ranges between approximately 10 and 30% by weight, preferably between approximately 15 and 25% by weight, and is preferably of about 20% by weight.

The abrasionproof substance, for example, is aluminium oxide (Al₂O₃, corundum).

In accordance with the invention, the polymer composition may even be applied using the "wet on wet" technique, i.e. immediately after the step of treating with polyvinyl alcohol, directly on the wet sheet material, with no intermediate step of drying the impregnated material (as in some conventional methods).

Application of the polymer composition, and possibly of a protective layer of a further resin (e.g. also melamine resin) containing microspheres of low-abrasion material (such as glass ), is followed by a drying step, after which, the sheet material is ready for use, e.g. for a subsequent (known) hot laminating step, in which it is joined to other appropriately prepared layers, and in which the polymerization and cross-linking reactions are possibly completed.

The method according to the invention is easy and relatively cheap to implement, and provides decorative sheets with a high degree of abrasion resistance and superior surface finish.

The method according to the invention is particularly satisfactory as regarding the end look of the product: the finished products, in fact, show no paling, dulling or loss of transparency of the surfaces treated in accordance with the invention.

Moreover, the decorative sheets obtained using the method according to the invention are much more flexible and less fragile than conventional sheets.

Finally, the polyvinyl alcohol effectively captures any free formaldehyde remaining on the paper material after the previous processing steps.

A number of non-limiting embodiments of the invention are described below.

### EXAMPLES

Water and polyvinyl alcohol mixtures with respective polyvinyl alcohol concentrations of 2, 5, 8, 10, 12, 15, 20% by weight were prepared.

Polyvinyl alcohols of different hydrolysis levels (approximately 80 to 90 mol% dry) were used, and more specifically, both partly hydrolyzed commercial products (with a dry hydrolysis level of approximately 80 to 90 mol%) and fully hydrolyzed commercial products (with a dry hydrolysis level of approximately 90 to 100 mol%).

One example of such products is the polyvinyl alcohols in the Lamovil family (maker: Lamberti Spa).

Cellulose-based sheet materials (paper) normally used in the art and in the form of reel-wound strips were set up; and the sheet materials, unwound continuously off the respective reels, were impregnated, by immersion in a bath, with the water and polyvinyl alcohol mixtures.

Some of the impregnated sheets were sent immediately to a conventional coating machine for coating with respective polymer compositions containing melamine resin, water and corundum ("wet on wet" technique).

Other sheets were pre-dried in an oven before being sent to the coating machine ("wet on dry" technique).

All the sheets were then given a final protective layer containing low-abrasion microspheres (e.g. glass beads) dispersed in a polymer (e.g. again melamine resin in water).

When dried, the sheets were hot laminated with known layers of various compositions to form flooring panels.

Further tests were run using polymer compositions containing melamine resin, water, corundum and polyvinyl alcohol in different concentrations (10, 15, 20, 25, 30% by weight).

In all cases, the resulting decorative sheets were particularly transparent and bright, with no defects or dulling, and were also highly flexible.

## Claims

1. A method of producing decorative sheets, in particular finish sheets for flooring, furniture or wall covering panels, comprising a step of applying to a sheet material a polymer composition containing at least one thermosetting resin in which is dispersed at least one abrasionproof substance; the method being **characterized by** comprising, prior to the step of applying said polymer composition to the sheet material, a step of impregnating the sheet material with polyvinyl alcohol; said step of applying the polymer composition being performed directly on said sheet material impregnated with polyvinyl alcohol.

2. A method as claimed in Claim 1, **characterized in that** the impregnating step is performed using an aqueous solution of polyvinyl alcohol.

3. A method as claimed in Claim 2, **characterized in that** the polyvinyl alcohol is used in an aqueous solution with a concentration of approximately 2 to 20% by weight.

4. A method as claimed in Claim 3, **characterized in that** the polyvinyl alcohol is used in an aqueous solution with a concentration of approximately 5 to 15% by weight, and preferably of about 10% by weight.

5. A method as claimed in one of Claims 2 to 4, **characterized in that** the step of applying the polymer composition is performed immediately after the step of impregnating with an aqueous solution of polyvinyl alcohol, directly on the wet sheet material, using the "wet on wet" technique.

6. A method as claimed in one of Claims 2 to 4, **characterized in that** a pre-drying step is performed between the step of impregnating with an aqueous solution of polyvinyl alcohol and the step of applying the polymer composition; the polymer composition being applied to a dry impregnated sheet material using the "wet on dry" technique.

7. A method as claimed in one of the foregoing Claims, **characterized in that** an amount of polyvinyl alcohol ranging between approximately 2 and 20 g/m², preferably between approximately 5 and 15 g/m², and preferably of about 10 g/m², is applied to the sheet material at the impregnating step.

8. A method as claimed in one of the foregoing Claims, **characterized in that** the step of applying the polymer composition is a coating step.

9. A method as claimed in one of the foregoing Claims, **characterized in that** the polymer composition is an aqueous dispersion containing polyvinyl alcohol mixed with the thermosetting resin.

10. A method as claimed in one of the foregoing Claims, **characterized in that** the sheet material is a cellulose-base material, in particular a paper material.

## Patentansprüche

1. Verfahren zur Herstellung von Dekorfolien, insbesondere von Deckfolien für Bodenbelag, Möbel oder Wandabdeckplatten, mit einem Schritt, mit dem auf ein Folienmaterials eine Polymerzusammensetzung mit mindestens einem wärmehärtenden Harz darin aufgebracht wird, in welchem mindestens eine abriebfeste Substanz dispergiert ist; wobei das Verfahren **dadurch gekennzeichnet ist, dass** es vor dem Schritt des Aufbringens der Polymerzusammensetzung auf das Folienmaterial einen Schritt des Tränkens des Folienmaterials mit Polyvinylalkohol umfasst; wobei der Schritt des Aufbringens der Polymerzusammensetzung direkt auf das mit Polyvinylalkohol getränkte Folienmaterial erfolgt.

2. Verfahren nach Anspruch 1, **dadurch gekennzeichnet, dass** der Schritt des Tränkens unter Verwendung einer wässrigen Lösung von Polyvinylalkohol erfolgt.

3. Verfahren nach Anspruch 1, **dadurch gekennzeichnet, dass** der Polyvinylalkohol in einer wässrigen Lösung mit einer Konzentration von annähernd 2 bis 20 Gew.-% verwendet wird.

4. Verfahren nach Anspruch 3, **dadurch gekennzeichnet, dass** der Polyvinylalkohol in einer wässrigen Lösung mit einer Konzentration von annähernd 5 bis 15 Gew.-% verwendet wird.

5. Verfahren nach einem der Ansprüche 2 bis 4, **dadurch gekennzeichnet, dass** der Schritt des Aufbringens der Polymerzusammensetzung unmittelbar nach dem Schritt des Tränkens mit einer wässrigen Lösung von Polyvinylalkohol unter Anwendung des "Nass-auf-Nass"-Verfahrens direkt auf das nasse Folienmaterial erfolgt.

6. Verfahren nach einem der Ansprüche 2 bis 4, **dadurch gekennzeichnet, dass** zwischen dem Schritt des Tränkens mit einer wässrigen Lösung von Polyvinylalkohol und dem Schritt des Aufbringens der Polymerzusammensetzung ein Vortrocknungsschritt erfolgt; wobei die Polymerzusammensetzung unter Anwendung des "Nass-auf-Trocken"-Verfahrens auf ein trockenes, getränktes Folienmaterial aufgebracht wird.

7. Verfahren nach einem der vorhergehenden Ansprüche, **dadurch gekennzeichnet, dass** eine Menge an Polyvinylalkohol im Bereich von annähernd 2 und 20 g/m², vorzugsweise zwischen annähernd 5 und 15 g/m² und vorzugsweise von etwa 10 g/m² in dem Tränkschritt auf das Folienmaterial aufgebracht wird.

8. Verfahren nach einem der vorhergehenden Ansprüche, **dadurch gekennzeichnet, dass** der Schritt des Aufbringens der Polymerzusammensetzung ein Beschichtungsschritt ist.

9. Verfahren nach einem der vorhergehenden Ansprüche, **dadurch gekennzeichnet, dass** die Polymerzusammensetzung eine wässrige Dispersion ist, welche mit dem wärmehärtenden Harz gemischten Polyvinylalkohol enthält.

10. Verfahren nach einem der vorhergehenden Ansprüche, **dadurch gekennzeichnet, dass** das Folienmaterial ein Material auf Cellulosebasis, insbesondere ein Papiermaterial, ist.

## Revendications

1. Procédé de production de feuilles décoratives, en particulier de feuilles de finition pour un revêtement de sol, des meubles ou des panneaux de revêtement mural, comprenant une étape d'application à un matériau en feuille d'une composition de polymère contenant au moins une résine thermodurcissable dans laquelle est dispersée au moins une substance résistant à l'abrasion ; le procédé étant **caractérisé en ce qu'**il comprend, avant l'étape d'application de ladite composition de polymère au matériau en feuille, une étape d'imprégnation du matériau en feuille avec du poly(alcool vinylique) ; ladite étape d'application de la composition de polymère étant effectuée directement sur ledit matériau en feuille imprégné avec le poly(alcool vinylique).

2. Procédé selon la revendication 1, **caractérisé en ce que** l'étape d'imprégnation est effectuée en utilisant une solution aqueuse de poly(alcool vinylique).

3. Procédé selon la revendication 2, **caractérisé en ce que** le poly(alcool vinylique) est utilisé dans une solution aqueuse avec une concentration d'approximativement 2 à 20 % en poids.

4. Procédé selon la revendication 3, **caractérisé en ce que** le poly(alcool vinylique) est utilisé dans une solution aqueuse avec une concentration d'approximativement 5 à 15 % en poids, et de préférence d'environ 10 % en poids.

5. Procédé selon l'une quelconque des revendications 2 à 4, **caractérisé en ce que** l'étape d'application de la composition de polymère est effectuée immédiatement après l'étape d'imprégnation avec une solution aqueuse de poly(alcool vinylique), directement sur le matériau en feuille humide, en utilisant la technique "humide sur humide".

6. Procédé selon l'une quelconque des revendications 2 à 4, **caractérisé en ce qu'**une étape de pré-séchage est effectuée entre l'étape d'imprégnation avec une solution aqueuse de poly(alcool vinylique) et l'étape d'application de la composition de polymère ; la composition de polymère étant appliquée à un matériau en feuille imprégné sec en utilisant la technique "humide sur sec".

7. Procédé selon l'une quelconque des revendications précédentes, **caractérisé en ce qu'**une quantité de poly(alcool vinylique) variant entre approximativement 2 et 20 g / m², de préférence entre approximativement 5 et 15 g / m2, et de préférence d'environ 10 g / m2, est appliquée au matériau en feuille à l'étape d'imprégnation.

8. Procédé selon l'une quelconque des revendications précédentes, **caractérisé en ce que** l'étape d'application de la composition de polymère est une étape de revêtement.

9. Procédé selon l'une quelconque des revendications précédentes, **caractérisé en ce que** la composition de polymère est une dispersion aqueuse contenant du poly(alcool vinylique) mélangé avec la résine thermodurcissable.

10. Procédé selon l'une quelconque des revendications précédentes, **caractérisé en ce que** le matériau en feuille est un matériau à base de cellulose, en particulier un matériau de papier.
